# EUROPÄISCHE PATENTSCHRIFT

(11) **EP 1 262 151 B1**
(45) Veröffentlichungstag und Bekanntmachung des Hinweises auf die Patenterteilung: **14.05.2008**
(21) Anmeldenummer: 02006116.4
(22) Anmeldetag: 18.03.2002
(51) Int. Cl.: A61C 5/06, B65D 81/32, B65D 51/32

(54) **Applikationsvorrichtung**
Applicator
Applicateur

(30) Priorität: 21.05.2001 DE 10124819
(43) Veröffentlichungstag der Anmeldung: 04.12.2002
(73) Patentinhaber: Ivoclar Vivadent AG, 9494 Schaan (LI)
(72) Erfinder: Müller, Frank, 6800 Feldkirch (AT)
(74) Vertreter: Baronetzky, Klaus

(56) Entgegenhaltungen:
- EP-A- 0 474 319
- EP-A- 1 103 230
- WO-A-95/20497
- CH-A- 358 031
- DE-A- 2 809 646
- DE-A- 3 421 823
- DE-U- 20 005 457
- FR-A- 2 739 357
- US-A- 3 690 777
- US-A- 5 088 627
- US-A- 6 105 761
- PATENT ABSTRACTS OF JAPAN vol. 1999, no. 03, 31. März 1999 (1999-03-31) & JP 10 329862 A (AIWA CO LTD), 15. Dezember 1998 (1998-12-15)

## Beschreibung

Die Erfindung betrifft eine Applikationsvorrichtung, gemäß dem Oberbegriff von Anspruch 1.

Eine derartige Applikationsvorrichtung ist beispielsweise aus der DE-U1-92 18 949 bekannt. Bei dieser Applikationsvorrichtung ist ein Auftragelement in einem Futteral mit seitlichen Löchern aufgenommen, über die ein Fluid eindringen kann, das der Benetzung des Auftragelements dient.

Mit dieser Lösung soll verhindert werden, dass das Fluid ungehindert austreten kann, wenn die Applikationsvorrichtung beispielsweise umgekippt wird. Hierzu sind Dichtflächen zwischen dem Futteral und dem Applikationselement vorgesehen.

Eine derartige Lösung mag im Bereich kosmetischer Produkte sinnvoll sein. Für den Dentalbereich ist aber eine präzise Beaufschlagung eines Applikationselements wesentlich. Auch wenn bei der DE-U1-92 18 949 relativ kleine Löcher in dem Futteral vorgesehen sind, die gemäss der Beschreibung eine gewisse Schutzwirkung entfalten sollen, ist. nicht ausgeschlossen, dass das Fluid unbeabsichtigt eindringt und das Applikationselement bereits vor dem eigentlichen Benutzungsvorgang benetzt.

Die US-A-3,690,777 beschreibt eine kombinierte Applikationsvorrichtung mit einem Behälter für Wimperntusche und einem separaten Eyeliner-Behälter, wobei diese beiden Behälter zwei Auftragselemente aufweisen. Jedoch werden weder ein festes Mischungsverhältnis der beiden Substanzen noch deren Reihenfolge des Auftragens beschrieben.

Auch die EP-A-0 474 319 beschreibt eine Applikationsvorrichtung mit einem Behälter für ein Fluid (Wimperntusche) mit einem Auftragselement, welches in das Fluid eingetaucht wird. Eine Reaktion mit einer weiteren Substanz findet hier insofern nicht statt.

Der Patents Abstract of Japan JP 10 329 862 A (AIWA CO LTD), 15. Dezember 1998 (1998-12-15) beschreibt darüberhinaus eine Applikationsvorrichtung mit einem röhrenförmigen Applikator und einem Behälter für ein Lösungsmittel an dem einen Ende sowie einem Auftragspinsel an dem anderen Ende des Applikators. Durch Druck auf den Flüssigkeitsbehälter kann die in diesem enthaltene Flüssigkeit durch das Röhrchen des Applikators mit einer zweiten in einem weiteren Behälter befindlichen Flüssigkeit in Kontakt gebracht werden. Eine genaue Dosierung der aus dem ersten Behälter abzugebenden Flüssigkeit ist jedoch kaum möglich, da der auszuübende Druck auf den ersten Behälter von Anwender zu Anwender signifikant schwanken kann.

Zahlreiche weitere Applikationsvorrichtungen sind bekannt geworden. So ist es beispielsweise vorgeschlagen worden, ein Applikationselement in einer Flüssigkeit eingetaucht zu halten, und durch Niederdrücken des Behälters für diese Flüssigkeit nach der Art eines Überlaufs eine weitere Flüssigkeit einströmen zu lassen, um die zu applizierende Mischung bereitzustellen. Diese Lösung bedarf allerdings zweier getrennter
Abdichtsysteme, so dass ein nicht unbeachtlicher Aufwand erforderlich ist. Eine Vielzahl von Dichtlinien bedingt allerdings auch eine entsprechend große Anfälligkeit und Lagerinstabilität.

Ferner ist es in diesem Zusammenhang auch bekannt geworden, eine Membran zwischen zwei Kammern, die die Flüssigkeiten aufnehmen, durch einen Dorn gezielt zu zerstören, der durch Eindrücken eines Innengehäuses aktivierbar ist. Diese Lösung bedingt allerdings eine besondere Ausgestaltung des Dorns, wenn sicher verhindert werden soll, daß der Dorn mit dem Applikationselement in Kollision gerät.

Es ist ferner bekannt geworden, reaktionsfähige Substanzen, z.B. ein Composit für Zahnfüllungen auf einer mit Peroxid beschichteten Unterlage zu mischen, bzw. das Composit mit einem peroxidbeschichteten Spatel anzumischen. Diese Anmischung hat den Nachteil, dass ein homogenes Vermischen durch das ziemlich zähflüssige Compositmaterial völlig verbraucht ist.

Ferner ist aus der DE-PS 43 159 20 eine Mischkapsel für Dentalmassen bekannt geworden, die einen Kolben aufweist, der mit einem Stempel ausgerüstet ist, der das gezielte Einleiten der Aktivierung ermöglicht. Diese Lösung erlaubt es, bis zu zwei flüssige Komponenten und eine pulverförmige Komponente räumlich getrennt vorzuhalten und im Bedarfsfall, also unmittelbar vor der Applikation, zu mischen.

Für die Aufbringung von mehr als drei Komponenten, aber auch für das Aufbringen von mehreren Komponenten nacheinander auf die zu behandelnde Stelle ist bei den bislang bekannten Apolikationsvorrichtungen nicht möglich.

Ein weiteres Problem bei Single-Dose-Einheiten besteht darin, dass je nach der Größe der zu behandelnden Stelle sehr unterschiedliche Mengen der erforderlichen Komponenten anfallen.

Gemäß dem Konzept von Single-Dose-Einheiten muss der nicht benötigte Rest, der durchaus bei 90% der Gesamtmenge liegen kann, dann verworfen werden. Aus Gründen der Wirtschaftlichkeit ist dies unerwünscht, so dass Zahnärzte dazu neigen, eher die Komponenten aus Gebinden zu verwenden und zu mischen. Das Selbstmischen erfordert jedoch eine entsprechende Erfahrung, um einerseits eine gute Vermischung der Komponenten sicherzustellen und andererseits die richtigen Mengenverhältnisse bereitzustellen.

Daher liegt der Erfindung die Aufgabe zugrunde, eine Applikationsvorrichtung gemäß dem Oberbegriff von Anspruch 1 zu schaffen, die einerseits eine größere. Flexibilität bei dem Auftragen von Substanzen, die aus mehreren Komponenten bestehen, bereitzustellen, die auch das sequentielle Auftragen der Substanzen ermöglicht, aber andererseits soweit erforderlich ein festes Mischungsverhältnis vorgibt, bei der insbesondere die Reihenfolge des Auftragens der Komponenten vorgegeben ist.

Diese Aufgabe wird erfindungsgemäß durch Anspruch 1 gelöst. Vorteilhafte Weiterbildungen ergeben sich aus den Unterensprüchen.

Die erfindungsgemäße Lösung bietet die Möglichkeit, ein Verhältnis zwischen der Menge einer festen Reaktionssubstanz, die auf einem Auftragelement aufgebracht ist, und der Menge eines Fluids in einem Behälter fix einzustellen. Erfindungsgemäß bildet der Behälter einen Griff oder zumindest den Schaft eines Griffs eines weiteren Auftragelements, das mit einer weiteren Reaktionssubstanz in Verbindung steht oder in Verbindung bringbar ist. Dies erlaubt es, nacheinander die Reaktionssubstanzen aufzubringen, wobei auch die Möglichkeit besteht, die dritte Reaktionssubstanz nach der Art eines Gebindes zu verwenden.

Es versteht sich, dass es besonders günstig ist, dass die beiden ersten Reaktionssubstanzen so gewählt sein können, dass ihr Mischungsverhältnis den Erfordernissen entspricht, während regelmäßig bei der dritten Komponente das Mischungsverhältnis, also beispielsweise die Schichtstärke im Verhältnis zur vorgemischten Substanz, die aus den ersten und zweiten Komponenten besteht, unkritisch ist.

In vorteilhafter Ausgestaltung ist es vorgesehen, die Ineinandersteckbarkeit der Behälter fortzusetzen, so dass in beliebiger Abfolge die erforderlichen Komponenten vorgefertigt bereitgehalten werden. Der Zahnarzt zieht je dann lediglich den entleerten Behälter ab und verwendet den nachfolgenden.

Die erfindungsgemäße Lösung bietet somit die Vorteile der Entnahme aus Gebinden, ohne dass das feste Mischungsverhältnis - soweit es erforderlich ist -, wie es bei Single-Dose-Einheiten realisierbar ist, aufgegeben werden müsste.

Erfindungsgemäß ist es günstig, dass sowohl feste als auch fluidische Reaktionssubstanzen verwendbar sind. Die fluidische Reaktionssubstanz kann eine Flüssigkeit oder aber auch ein Pulver sein. Auf dem Ende des Applikationselements kann als Reaktionssubstanz auch ein Doppel-Katalysatorsystem als Salz aufgebracht sein.

Es versteht sich, dass die Abdichtung zwischen dem Kolben und dem Behälter in beliebiger geeigneter Weise vorgesehen sein kann. Besonders günstig ist es, dass ein Kolben typischerweise einen festen Boden aufweist. In Verbindung mit einer geeigneten Ringdichtung ergibt sich so eine Lösung, die einem erheblich größeren Dampfdruck standhält als eine Lösung, die sich auf Folien zur Separierung von Reaktionssubstanzen verlässt.

Erfindungsgemäß ist es auch günstig, dass trockene Reaktionssubstanzen verwendet werden können, die regelmäßig eine besondere Stabilität aufweisen. Die erfindungsgemäße Lösung ermöglicht es, in beliebigen Kombinationen einzelne oder mehrere Komponenten gleichzeitig, also gemischt, und nacheinander aufgetragen. Erfindungsgemäß besonders günstig ist es, dass durch das Ineinanderstecken der einzelnen Behälter zugleich auch die Abdichtung der je nachfolgenden Komponente sichergestellt ist. Diese Lösung bietet insofern die Doppelfunktion, zum einen einen Griff mit verbesserter Handhabbarkeit bereitzustellen und zum anderen die Abdichtung für die je betrachtete Komponente sicherzustellen.

In vorteilhafter Ausgestaltung ist ein Aussteifungs-Rohr vorgesehen, das die Vielzahl der ineinander gesteckten Behälter aussteift und ein versehentliches Lösen verhindert. Es versteht sich, dass bei entsprechend großem Überlappungsbereich zwischen Schaft und Behälter eine ausreichende mechanische Stabilität auch ohne ein entsprechendes Aussteifungsrohr gegeben sein kann.

Erfindungsgemäß kann als nach außen weisende Abdicht- und Führungsfläche entweder der Griff selbst oder aber auch der Schaft zu dem Griff eingesetzt sein. Die Verwendung des Schaftes hat den Vorteil, dass die Behälter zueinander den gleichen Außendurchmesser aufweisen können, auch wenn sie zylindrisch geformt sind.

In einer modifizierten Ausgestaltung sind die Behälter außen konisch und erlauben so die Ineinandersteckbarkeit.

Während die Abdichtung auch zwischen den Außenflächen des Schafts und den Innenflächen des Behälters nach der Art einer Flächendichtung oder gegebenenfalls einer Labyrintdichtung mögich ist, ist es bevorzugt, eine Ringdichtung als Liniendichtung einzusetzen. Hierzu kann ein Ringvorsprung entweder an der Innenseite des Behälters oder an der Außenseite des Schafts vorgesehen sein kann, der die Dichtfunktion bereitstellt. In einer modifizierten Ausgestaltung ist es vorgesehen, einen kleinen Dichtring aus einem weichelastischem Material an dem Übergang zwischen Schaft und Griff einzusetzen.
Bei dieser Ausgestaltung ist es günstig, wenn die Steckposition über ein Rastelement gesichtert ist, um einen Andruck der Behälterkante an den Dichtring zu gewährleisten.

Erfindungsgemäß ist es auch günstig, dass die Applikationsvorrichtung mehrere Auftragselemente bereitstellt. Damit ist sichergestellt, dass auch dann Reaktionssubstanzen verwendet werden können, wenn vorgeschrieben ist, dass die beiden Komponenten nicht mit dem gleichen Applikator aufgetragen werden dürfen. Ein verwechslungssicheres Auftragen der Komponenten nacheinander lässt sich so sicherstellen, und unerwünschte Reaktionen vor dem Auftragen werden vermieden.

Die erfindungsgemäße Lösung ist nicht nur für das Auftragen von Dentalmaterialien im eigentlichen Sinne möglich. Beispielsweise lassen sich auch Reiniger oder zwei Komponenten von Klebstoffen in beliebiger geeigneter Weise einsetzen, beispielsweise auch Lacke, insbesondere Reparaturlacke für Kraftfahrzeuge.

Weitere Vorteile, Einzelheiten und Merkmale ergeben sich aus der nachfolgenden Beschreibung zweier Ausführungsbeispiele der Erfindung anhand der Zeichnung.

Es zeigen:
- Fig. 1: eine schematisierte Darstellung einer ersten Ausführungsform einer erfindungsgemäßen Applikationsvorrichtung;
- Fig. 2: die Ausführungsform gemäß Fig. 1, wobei ein Außenbehälter abgenommen ist und die Applikationsvorrichtung gebrauchsfertig ist;
- Fig. 3: die Ausführungsform gemäß Fig. 1 und 2, wobei die zweite Substanz aktiviert ist;
- Fig. 4: die Ausführungsform gemäß Fig. 1 bis 3, wobei die zweite Substanz auf dem Auftragselement gebrauchsfertig ist; und
- Fig. 5: eine schematische Darstellung einer weiteren Ausführungsform einer erfindungsgemäßen Applikationsvorrichtung.

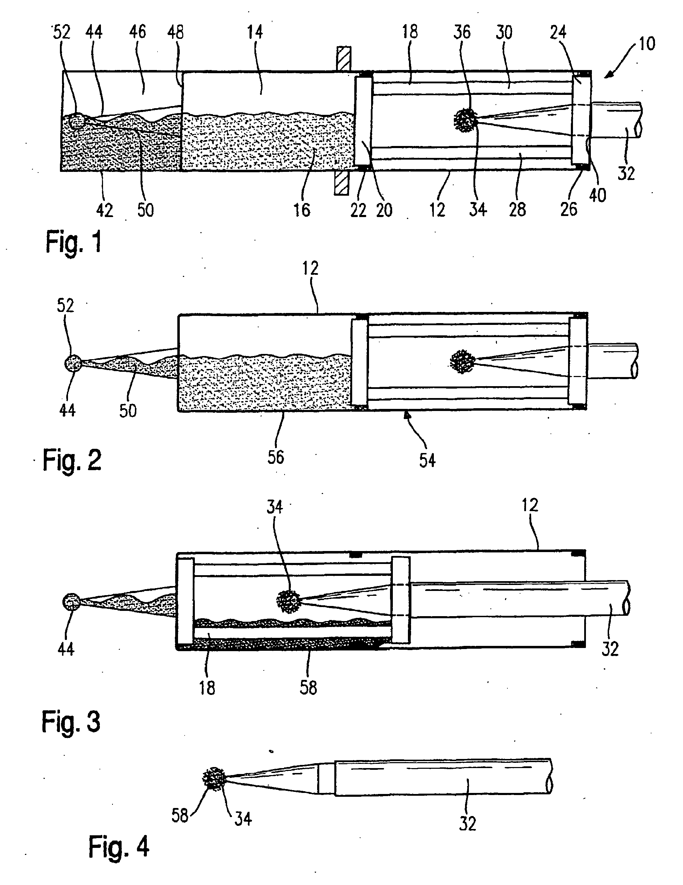

Die in Fig. 1 dargestellte Applikationsvorrichtung 10 weist einen Behälter 12 auf. Der Behälter 12 nimmt in seinem Innenraum 14 eine Reaktionssubstanz 16 auf, die in dem dargestellten Ausführungsbeispiel eine Flüssigkeit ist.

Der Behälter 12 führt einen Kolben 18, der erfindungsgemäß in besonderer Weise ausgebildet ist. Der Kolben 18 weist einen Kolbenboden 20 auf. Er erstreckt sich etwa von der Mitte des becherförmigen Behälters 12 bis zu dessen offenen Ende. In dieser Position weist der Behälter 12 an dem Kolbenboden 20 anliegend und gegen diesen drückend einen ringförmigen Dichtvorsprung 22 auf. Der Kolben 18 weist ferner einen Kolbendeckel 24 auf, der an einem weiteren Dichtvorsprung 26 des Behälters 12 an dessen offenen Ende anliegt. Zwischen Kolbenboden 20 und Kolbendeckel 24 erstrecken sich Streben 28, 30, die den seitlichen Flüssigkeitseintritt ermöglichen. Insofern besitzt die Seitenwand des Kolbens 18 oder Einsatzes Öffnungen für den Flüssigkeitseintritt.

In dem Kolbendeckel 24 ist ein Auftragselement 32 aufgenommen, das an seinem Arbeitsende 34 eine Reaktionssubstanz 36 trägt. Das Arbeitsende 34 kann in an sich bekannter Weise als Micropinsel, als Schwämmchen oder als Flies oder in beliebiger anderer geeigneter Weise ausgestaltet sein. Die Reaktionssubstanz 36 ist bevorzugt ein Salz, das durch Trocknen einer entsprechenden Flüssigkeit auf dem Arbeitsende 34 bereitgestellt wurde.

Das Auftragselement 32 weist dem Kolbendeckel 24 benachbart einen Absatz 40 auf, der ein Eindrücken des Auftragselements 32 über die in Fig. 1 dargestellte Position hinaus verhindert.

Soll die zu applizierende Substanz aus der Reaktionssubstanz 36 bereitgestellt werden, wird Druck auf das Auftragselement 32 ausgeübt. Hierdurch wird der Kolben 18 unter Überwindung der Dichtwirkung des Dichtvorsprungs 22 eingeschoben. Die flüssige Reaktionssubstanz 16 strömt dann in den Bereich des Kolbens 18 und reagiert dort mit der Reaktionssubstanz 36.

Ferner weist die Applikationsvorrichtung in dem in Fig. 1 dargestellten Ausführungsbeispiel einen Außenbehälter 42 auf', der eine weitere Reaktionssubstanz 44 aufnimmt. Die Reaktionssubstanz 44 ist dem dargestellten Ausführungsbeispiel ebenfalls eine Flüssigkeit. Ein Innenraum 46 des ebenfalls becherförmigen Außenbehälters 42 ist von dem Behälter 12 abgeschlossen. Der Behälter 12 weist einen Behälterboden 48 auf. Zentral an dem Behälterboden 48 ist ein weiteres Auftragselement 50 befestigt. Das Auftragselement 50 weist ein Arbeitsende 52 auf, das in die Reaktionssubstanz 44 eingetaucht ist.

Der Außenbehälter 42 bietet damit die Möglichkeit, eine weitere Reaktionssubstanz 44 aufzutragen, die vor oder nach der Substanz aus den Reaktionssubstanzen 16 und 36 aufgebracht werden kann.

In Fig. 2 ist dargestellt, in welcher Weise die Applikationsvorrichtung 10 nach Abziehen des Außenbehälters 42 eingesetzt werden kann. In diesem Zustand ist.die Substanz aus der Reaktionssubstanz 16 und 36 noch nicht aktiviert, und die Außenseite 54 des Behälters 12 dient als Griff für das Auftragselement 50, das die Reaktionssubstanz 44 an seinem Arbeitsende 52 trägt. Durch erneutes Eintauchen in den Innenraum des Außenbehälters 42 lässt sich weitere Reaktionssubstanz 44 dem Arbeitsende 52 zuführen, wenn die Reaktionssubstanz 44 durch Kontakt mit der zu behandelnden Stelle verbraucht ist. Insofern bildet der Behälter 12 mit seiner Außenfläche 54 zugleich einen Griff 56 eines weiteren Auftragselements 50.

Aus Fig. 3 ist ersichtlich, in welcher Weise die Reaktionssubstanz 16 in Kombination mit der Reaktionssubstanz 36 aktivierbar ist. Der Kolben 18 ist in dieser Position vollständig in den Behälter 12 eingeschoben, und durch die Reaktion der beiden genannten Reaktionssubstanzen entsteht die Substanz 58. Durch Herausziehen des Auftragselements 32 aus dem Innenraum des Kolbens 18 lässt sich die an dem Arbeitsende 34 vorhandene Substanz 58 einsetzen und auf die zu behandelnde Stelle auftragen.

Es versteht sich, dass in dieser Situation zwei Substanzen getrennt vorliegen. Je nach Bedarf kann entweder die Substanz 58 oder die Substanz 44 zunächst aufgetragen werden. Fig. 4 zeigt das Auftragselement 32, das die Substanz 58 an seinem Arbeitsende 34 trägt.

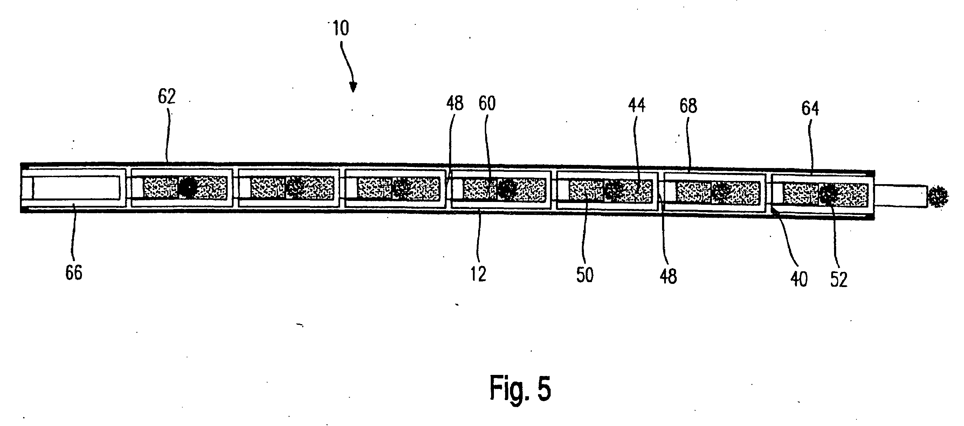

Eine weitere Ausführungsform einer erfindungsgemäßen Applikationsvorrichtung 10 ist aus Fig. 5 ersichtlich. Bei dieser Lösung sind zahlreiche Behälter 12 ineinandergesteckt vorgesehen, in dem dargestellten Ausführungsbeispiel 8 Behälter. Diese Ausführungsform ist für das sequentielle Auftragen von Substanzen bestimmt. Hierzu weist jeder Behälter in seinem Innenraum 46 eine Reaktionssubstanz 44 auf. In den Innenraum eingetaucht ist ein Auftragselement 50 mit einem recht dicken Schaft 60. Das Auftragselement 50 weist ein Arbeitsende 52 auf, das von der Reaktionssubstanz 44 benetzt ist. Das Auftragselement 50 ist mit dem Boden 48 des nachfolgenden Behälters 12 verbunden, der insofern mit dem Auftragselement 50 in den zunächst betrachteten Behälter 12 eingesteckt.

Die Einstecklänge kann in weiten Bereichen an die Erfordernisse angepasst werden. Bevorzugt entspricht der Durchmesser des Schafts 60 dem Innendurchmesser des Behälters 12 und erstreckt sich etwa über die halbe Länge des Behälters 12. Hierdurch ergibt sich eine recht stabile Lagerung der Behälterinneren, da auch in eingestecktem Zustand. Eine Dichtung zwischen dem Schaft 60 und dem Behälter 12 kann in beliebiger geeigneter Weise vorgesehen sein. Beispielsweise kann jeder Behälter 12 an seinem offenen Ende einen Dichtvorsprung tragen, der dem je vorgesehenen Vorsprung 40 des Auftragselements benachbart ist und dort eine Liniendichtung bereitstellt.

In dem dargestellten Ausführungsbeispiel ist die Mehrfachanordnung von Behältern 12 durch ein Rohr 62 ausgesteift.

Für die Aktivierung des ersten Behälters wird kurzerhand der erste Behälter 64 aus dem Aussteifungs-Rohr 62 herausgezogen und in den letzten Behälter 66 eingesteckt. Durch Druck auf die offene Rückseite des becherförmigen Behälters 64 wird die Steckanordnung der Behälter in dem Rohr 62 soweit vorgeschoben, dass das Arbeitsende 52 des zweiten Behälters 68 aus dem Aussenrohr 62 ausreichend vorragt, um dort ein Aufbringen der Reaktionssubstanz 44 zu ermöglichen.

Es versteht sich, dass die Abfolge der Reaktionssubstanzen in den Behältern je nach Anwendungsfall abgewandelt werden kann. Beispielsweise können abwechselnd zwei Reaktionssubstanzen in den Behältern vorgesehen sein, so dass die erforderlichen Substanzen automatisch nacheinander aufgebracht werden.

## Patentansprüche

1. Applikationsvorrichtung (10) mit wenigstens einem Behälter für ein Fluid, der im Wesentlichen becherförmig ist, mit einem Auftragselement (32), das an einem Arbeitsende (34) eine Reaktionssubstanz (36) trägt, wobei
für die Erzeugung der zu applizierenden Substanz die Reaktionssubstanz (36) mit einer weiteren Reaktionssubstanz (16), insbesondere dem Fluid, durch Druckausübung auf das Auftragselement (32) zusammenführbar ist, **dadurch gekennzeichet, dass** der Behälter (12) zugleich einen Griff (56) oder den Schaft zu einem Griff eines weiteren Auftragselements (50) zum Auftragen einer weiteren zu applizierenden Substanz (44) bildet, und
dass der Behälter einen Einsatz (18) aufnimmt, der in den Behälter durch Druck auf das Auftragselement (32, 50) eindrückbar ist, wobei in eingedrücktem Zustand eine Flüssigkeitsverbindung zwischen der Reaktionssubstanz (36) im Inneren des Einsatzes und dem Behälterinnenraum (14, 46) besteht.

2. Applikationsvorrichtung nach Anspruch 1,
**dadurch gekennzeichnet, dass** eine Mehrzahl von Behältern ineinander gesteckt angeordnet sind, wobei je ein Auftragselement (32, 50) in den benachbarten Behälter hineingeht.

3. Applikationsvorrichtung nach Anspruch 1 oder 2,
**dadurch gekennzeichnet, dass** die zu applizierenden Substanzen sequentiell auftragbar sind.

4. Applikationsvorrichtung nach einem der vorhergehenden Ansprüche,
**dadurch gekennzeichnet, dass** die Behälter (12, 42, 64, 66, 68) gegen einen Schaft (60) des Auftragselements (32, 50) abdichten.

5. Applikationsvorrichtung nach einem der vorhergehenden Ansprüche,
**dadurch gekennzeichnet, dass** ein Schaft (60) des Auftragselements (32, 50) Abmessungen aufweist, die der Innenoberfläche des Behälters (12, 42, 64, 66, 68) entsprechen und eine Länge aufweist, die dem halben bis doppelten Durchmesser, insbesondere etwa dem Durchmesser des Behälters entspricht.

6. Applikationsvorrichtung nach einem der vorhergehenden Ansprüche,
**dadurch gekennzeichnet, dass** der Behälter (12, 42, 64, 66, 68) zylindrisch ist und ein Längen-/Durchmesser-Verhältnis von mindestens 1:1, insbesondere etwa 3:1 aufweist.

7. Applikationsvorrichtung nach einem der vorhergehenden Ansprüche,
**dadurch gekennzeichnet, dass** der Einsatz als Kolben ausgeführt ist, wobei der Behälter (12) den Kolben (18) führt, der innen hohl ist und in welchem das Auftragselement (32) einsteckbar ist.

8. Applikationsvorrichtung nach einem der vorhergehenden Ansprüche,
**dadurch gekennzeichnet, dass** der Einsatz als Kolben ausgeführt ist, wobei der Behälter (12) den Kolben (18) aufnimmt und in dem Ausgangszustand einen Ringvorsprung (22, 26) aufweist, der gegen den Kolbens (18) in den Behälter ein Spalt, insbesondere ein Ringspalt das Überströmen des Fluids in den Innenraum (14) des Kolbens (18) erlaubt.

9. Applikationsvorrichtung nach einem der vorhergehenden Ansprüche,
**dadurch gekennzeichnet, dass** der Behälter (12) in einem Außenbehälter (42) eingesteckt ist, der in seinem Innenraum (46) von dem Behälterboden (48) abgeschlossen, ein weiteres Fluid aufnimmt und das der Behälterboden (48) mit einem weiteren Auftragselement (50) ausgerüstet ist.

10. Applikationsvorrichtung nach einem der vorhergehenden Ansprüche,
**dadurch gekennzeichnet, dass** die ineinandergesteckte Anordnung von Behältern (12, 42, 64, 66, 68) mit einem Rohr (62) ausgesteift ist, indem die Behälter verschiedlich sind.

11. Applikationsvorrichtung nach einem der vorhergehenden Ansprüche,
**dadurch gekennzeichnet, dass** die ineinander gesteckten Behälter (12) in einem Rohr (62) zueinander gleich sind und dass ein erster Behälter (68) in einem letzten Behälter (66) wieder einsteckbar und die ineinandergesteckte Anordnung von Behältern (12) durch das Rohr (62) hindurchschiebbar ist.

## Claims

1. An applicator device (10) with at least one container for a fluid, which is substantially cup-shaped, with an applying element (32) which at one operative end (34) carries a reaction substance (36), wherein
to create the substance to be applied the reaction substance (36) can be united with a further reaction substance (16), in particular the fluid, by exerting pressure on the applying element (32), **characterised in that** the container (12) forms at the same time a handle (56) or a shank for a handle of further applying element (50) for applying a further substance (44) to be applied, and
that the container accommodates an insert (18) which can be pressed into the container by pressure on the applying element (32,50), wherein in the pressed-in condition a fluid communication is established between the reaction substance (36) inside the insert and the container interior (14,46).

2. An applicator device according to Claim 1, **characterised in that** a plurality of containers are arranged inserted inside one another, wherein a respective applying element (32,50) enters the adjacent container.

3. An applicator device according to Claim 1 or 2, **characterised in that** the substances to be applied can be applied sequentially.

4. An applicator device according to any one of the preceding Claims, **characterised in that** the containers (12,42,64,66,68) seal against a shank (60) of the applying element (32,50).

5. An applicator device according to any one of the preceding Claims, **characterised in that** a shank (60) of the applying element (32,50) is of dimensions which correspond to the inner surface of the container (12,42,64,66,68) and is of a length which corresponds to between half and double the diameter, in particular approximately to the diameter of the container.

6. An applicator device according to any one of the preceding Claims, **characterised in that** the container (12,42,64,66,68) is cylindrical and has a length/diameter ratio of at least 1:1, in particular approximately 3:1.

7. An applicator device according to any one of the preceding Claims, **characterised in that** the insert is in the form of a piston, wherein the container (12) guides the piston (18) which internally is hollow and in which the applying element (32) can be inserted.

8. An applicator device according to any one of the preceding Claims, **characterised in that** the insert is in the form of a piston, wherein the container (12) accommodates the piston (18) and in the starting condition has an annular projection (22,26) which allows a clearance with respect to the piston (18) in the container, in particular an annular clearance, which allows the fluid to overflow into the interior (14) of the piston (18).

9. An applicator device according to any one of Claims, **characterised in that** the container (12) is inserted in an outer container (42) which in its interior (46) is sealed from the container bottom (48), accommodates a further fluid and the container bottom (48) is provided with a further applying element (50).

10. An applicator device according to any one of Claims, **characterised in that** the assembly of containers (12,42,64, 66,68) inserted one inside the other is reinforced with a tube (62), the containers being different.

11. An applicator device according to any one of the preceding Claims, **characterised in that** containers (12) inserted one inside the other in a tube (62) are the same as one another, and **in that** a first container (68) can be inserted again in the last container (66) and the assembly of containers (12) inserted one inside the other can be pushed through the tube (62).

## Revendications

1. Applicateur (10) avec au moins un conteneur pour un fluide, qui est essentiellement en forme de godet, avec un élément d'application (32), qui porte une substance réactive (36) au niveau d'une extrémité de travail (34),
dans lequel la substance réactive (36) est apte à être mélangée avec une autre substance réactive (16), en particulier le fluide, pour produire la substance à appliquer par application de pression sur l'élément d'application (32), **caractérisé en ce que** le conteneur (12) forme en même temps une poignée (56) ou la tige pour obtenir une poignée d'un autre élément d'application (50) servant à appliquer une autre substance (44) à appliquer, et
**en ce que** le conteneur reçoit un insert (18), qui est apte à être enfoncé dans le conteneur par pression sur l'élément d'application (32, 50), sachant qu'à l'état enfoncé, il y a une liaison fluidique entre la substance de réaction (36) à l'intérieur de l'insert et la chambre intérieure du conteneur (14, 16).

2. Applicateur selon la revendication 1,
**caractérisé en ce qu'**une pluralité de conteneurs sont emboîtés les uns dans les autres, respectivement un élément d'application (32, 50) pénétrant dans le conteneur adjacent.

3. Applicateur selon la revendication 1 ou 2,
**caractérisé en ce que** les substances à appliquer sont applicables séquentiellement.

4. Applicateur selon l'une quelconque des revendications précédentes,
**caractérisé en ce que** les conteneurs (12, 42, 64, 66, 68) assurent l'étanchéité au niveau d'une tige (60) de l'élément d'application (32, 50).

5. Applicateur selon l'une quelconque des revendications précédentes,
**caractérisé en ce qu'**une tige (60) de l'élément d'application (32, 50) présente des dimensions, qui correspondent à la surface intérieure du conteneur (12, 42, 64, 66, 68) et présente une longueur qui correspond à une valeur comprise entre la moitié et le double du diamètre, en particulier à peu près au diamètre du conteneur.

6. Applicateur selon l'une quelconque des revendications précédentes,
**caractérisé en ce que** le conteneur (12, 42, 64, 66, 68) est cylindrique et présente un rapport longueur / diamètre d'au moins 1:1, en particulier d'environ 3:1.

7. Applicateur selon l'une quelconque des revendications précédentes,
**caractérisé en ce que** l'insert est réalisé sous forme de piston, le conteneur (12) guidant le piston (18) qui est creux à l'intérieur et dans lequel l'élément d'application (32) est enfichable.

8. Applicateur selon l'une quelconque des revendications précédentes,
**caractérisé en ce que** l'insert est réalisé sous forme de piston, le conteneur (12) recevant le piston (18) et présentant à l'état initial une saillie annulaire (22, 26), et **en ce que** une fente contre le piston (18) dans le conteneur, en particulier une fente annulaire, permet l'écoulement du fluide dans la chambre intérieure (14) du piston (18).

9. Applicateur selon l'une quelconque des revendications précédentes,
**caractérisé en ce que** le conteneur (12) est enfiché dans un conteneur extérieur (42), qui reçoit un autre fluide dans sa chambre intérieure (46) fermée par le fond du conteneur (48) et **en ce que** le fond du conteneur (48) est pourvu d'un autre élément d'application (50).

10. Applicateur selon l'une quelconque des revendications précédentes,
**caractérisé en ce que** l'emboîtement de conteneurs (12, 42, 64, 66, 68) est renforcé avec un tuyau (62) par le fait que les conteneurs sont différents.

11. Applicateur selon l'une quelconque des revendications précédentes,
**caractérisé en ce que** les conteneurs (12) emboîtés les uns dans les autres dans un tuyau (62) sont identiques les uns aux autres et **en ce qu'**un premier conteneur (68) est à nouveau enfichable dans un dernier conteneur (66) et l'emboîtement de conteneurs (12) peut coulisser à travers le tuyau (62).
